Europäisches Patentamt

European Patent Office

Office européen des brevets

(11) Publication number: **0 602 767 A1**

## EUROPEAN PATENT APPLICATION

(21) Application number: **93304006.5**

(22) Date of filing: **24.05.93**

(51) Int. Cl.5: **H02N 1/00**

(30) Priority: **13.12.92 EG 7731292**

(43) Date of publication of application:
**22.06.94 Bulletin 94/25**

(84) Designated Contracting States:
**CH DE ES FR GB LI**

(71) Applicant: **Mohamed Bediwi, Ahmed Farag**
**20 Abou Taleb Maghagh**
**El Minia(EG)**
Applicant: **Ali Mohamed, Soad Mohamed**
**3 El Lowaa Abd El Aziz Ali,**

**Helioples**
**Cairo(EG)**

(72) Inventor: **Mohamed Bediwi, Ahmed Farag**
**20 Abou Taleb Maghagh**
**El Minia(EG)**

(74) Representative: **Baillie, Iain Cameron**
**c/o Ladas & Parry**
**Altheimer Eck 2**
**D-80331 München (DE)**

(54) **Apparatus and method for converting electrostatic energy into mechanical energy.**

(57) An electrostatic motor consisting of three parts:
(A) an electrostatic charges generator;
(B) an electrostatic potential difference generator;
(C) a cylinder and piston assembly for converting the electrostatic charges and the electrostatic potential difference into mechanical work.

FIG. 1

From the begining of life the human-being goes around the energy as essential factor for civilization, The energy begin with the hard fuel like cool and then steam period then liquid fuel like Petroleum then electricity generation but all these sources of energy have disadvantages:

The pollution results from burning of petroleum and wood and the high costs but our new patent introduce a new source of energy has the following advantages:

- Clean-High output power-Cheap,

This source is the electrostatic motor.

**Operating theory:**

Operating the electrostatic motor depends on the effecting of the electrostatic field on the electrostatic charges. That as the result of placing on electrostatic charge in an electrostatic field, the charge will be effected with the field ad gain force which converts into kinetic energy.

This force depends upon :-
- Kinds of the electrostatic charge.
- Electrostatic field directions.

Electrostatic motor construction :

The electrostatic motor consists of three main parts as illustrated below :-
Electrostatic main part are :
**1- A part for generating the electrostatic charges.**
Battery- Rays Tube - Ionizing Room - Charge limiter or Electrostatic charges photo-electric generator or Electrostatic charges generator by using the substance in the ionized matter.
**2- A part for generating the electrostatic potential difference and controlling its direction.**
Potential crystal generator or Potential induced generator - Potential poles mechanical reverser.
**3- A part of converting both the electrostatic potential difference and the electrostatic charges kinetic energy.**
motion chamber - Crank shaft.

**A part for generating electrostatic charges consists of:**

- Electrostatic charges generator using ionized rays :-

This part consists of :

A- Cathode ray tube "Roentgen Tube" for producing "rays"

As know, the cathode tube consists of a( bulb-cathode-anode-filament)

- high voltage generator " Rumkorff coil"

But the cathode tube with its common construction will not be suitable as a part of the electrostatic motor.

Many disadvantages will appear during the motor working. These disadvantages decrease the tube's efficiency.

These disadvantages are illustrated below:
- The high sensitivity of the tube with its common construction makes it unsuitable for the hard work of the electrostatic motor ( generating Energy)
- Removing out the filament or Rumkorff coil completely ( when decaying ) causes spare parts high costs.

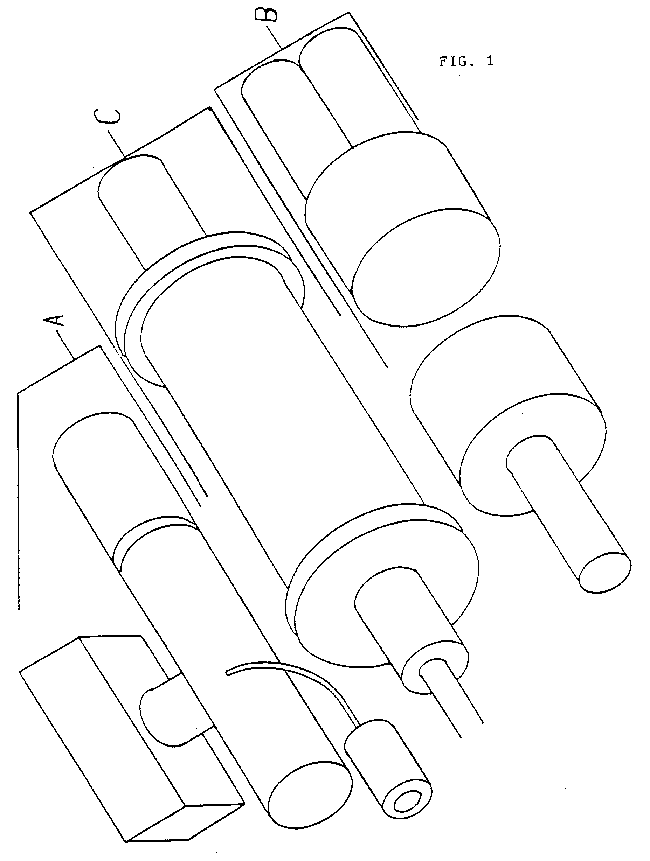

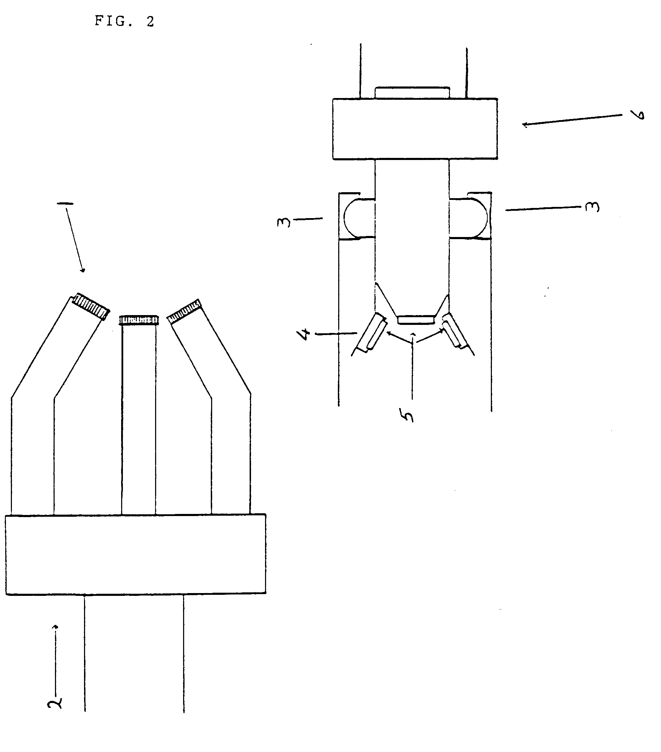

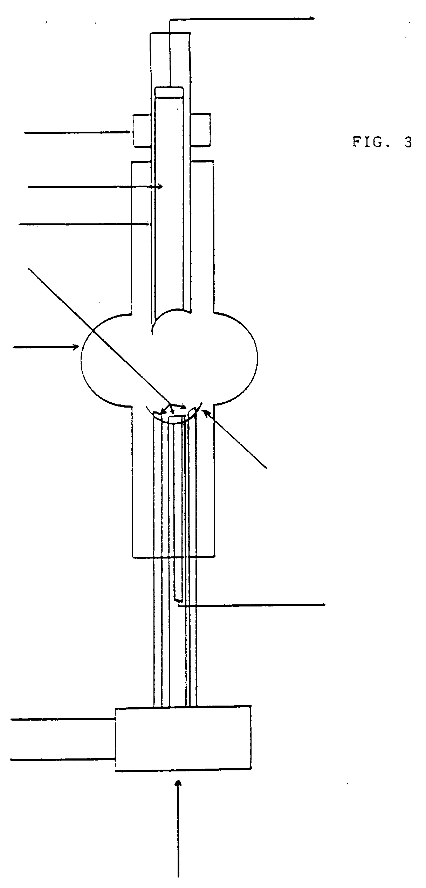

To avoid these disadvantages we did some changes on the filament and the Rumkorff coil :
Changes done on the filament :-
- Divide the filament into many filaments.
- coil up the filaments around a thermal electric insulator ( made of porcelain ). as shown in Fig. 2
- Fix up this set ( filament + porcelain)) on the cathode inside the tube.
- Fix up the cathode on the two movable bearings to change the cathode position when need (Fig. 2)
- Dividing the filament into many filaments allows us to remove only the decaying filament.
- Making the cathode moving allows to change its direction to make the thermal isolation filaments on the cathode force the anode and produce rays.

(Fig. 2 ) shows :-
1- Filament fixed on the thermal electric insulator ( Porcelain ).
2- Filaments connection circuit.
3,3- Cathod's bearings.
4- Cathode
5- Filaments
6- Filaments connection circuits.
Changes done on the Rumkorff coils :-
For saving Rumkorff coil divide both the primary coil and the secondar coil into many coils.
- Join the primary divided coils together and do the same with the secondary coil.

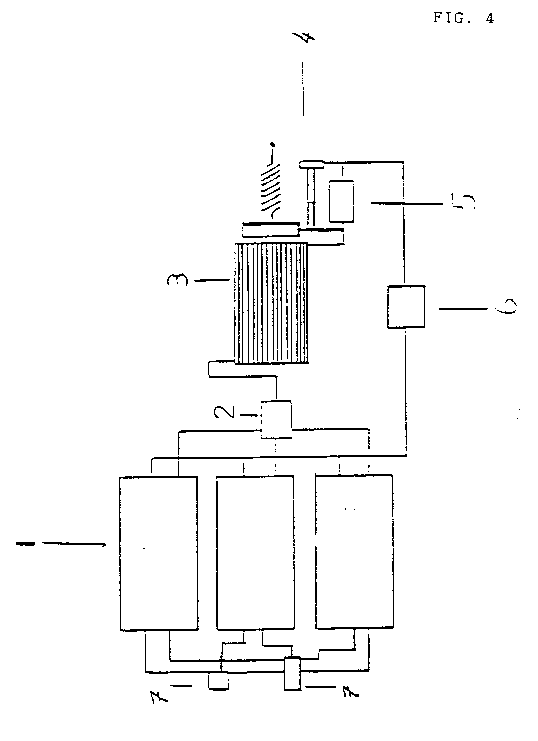

- ( Fig 4 ) shows
1- Starters.
2- Input part terminal ( Made of copper )
3- A metallic core with a coil (Works as a magnet)
4- Cut out
5- Condenser.
6- Battery.
7- Two copper parts ( Output terminal)
For example :-
By using Rumkorff coil, with its common construction a primary coil + a secondary coil can get ( 75 k.v.) output from a low voltage source ( Battery 12 v. It is not suitable when we use Rumkorff with the electrostatic motor, the coils can bear the hard work.

- Dividing both the primary and the secondary coils in Rumkorff for example into three coil gives 25 Kv each allows to remove only the decayed of the three coils. We do not need to remove the whole secondary coil.

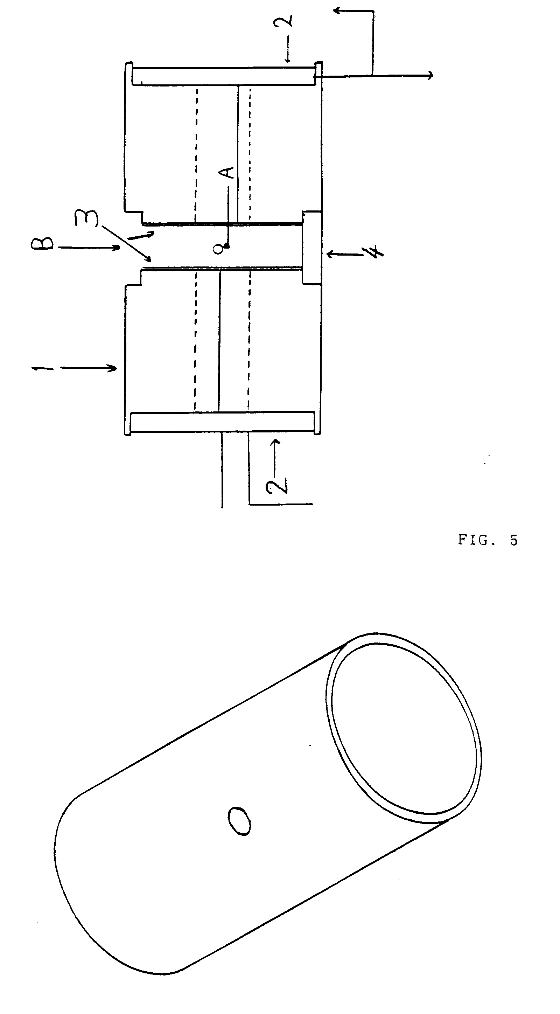

## B- Ionizing chamber consists of (Fig. 5) :

1- Chamber's body ( made of strong electric insulator body to prevent electrostatic charges escaping ) (Ocolone).
2-2- Discs made of aluminum or copper.
3- Two metallic parts.
4- Copper discs
(Two entrance in the chamber a,b a- for entering air b- For entering the ionized charges .)

Notes:

Each half of the disc (3) is connected to the metallic disc which has the same direction (the discs 2,2).

- The half cylinder (3) connected with a negative electrostatic potential.
- It is preferable to use an air pressure regulator with a gauge for regulating the inlet air pressure to the space between the two cylinder's halves, at this pressure the Rays able to ionize the inlet air.

Operation :-

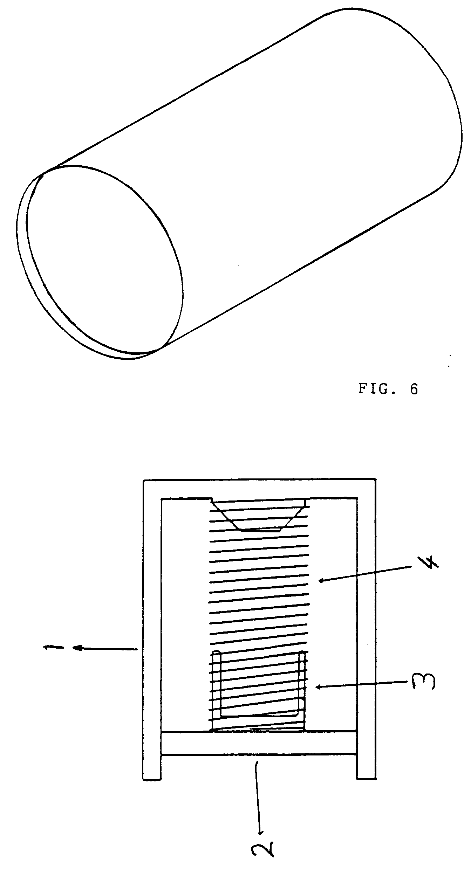

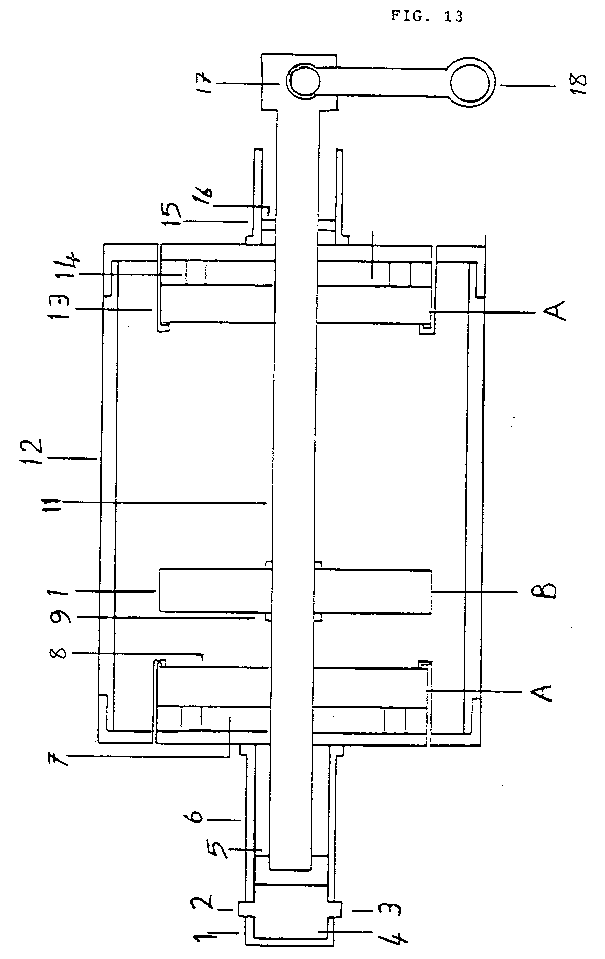

- Air go in through the entrance (a) and fulls the space between the two cylinders halves.
- Rays go in through the entrance (b) for ionizing the air producing negative electrostatic charges and positive electrostatic charges.
- The negative potential on the half cylinder (the left half for example) this potential attract all the positive charge and discharge this charges to the earth by its ground connection.
- The negative electrostatic potential on the half cylinder (3) also repulse the negative charge to the other half of the cylinder which is charged by this charge and also the metallic disc which connected to it.
- The disc has two terminals :-
- The first is connected with the charge limiter ( fig. 6).
- The other is connected with the motion chamber. (fig. 13)

## C- Charge limiters.

As know, there are not any direct usual measuring devices for the electrostatic charges in addition to the high sensitivity of the cathode tube, thus, to save the tube it is necessary to create a device for controlling the charges quantity to measure the charges inletting to the tube.

This device is "The charge limiter " (Fig. 6)
The charges limiter function :-
1- Save the tube before carrying out the ionizing operation.
2- Regulating the electronic charges quantity.
3- Connecting and disconnecting the tube according to the needed quantity of the charges.
Charge limiter reconnected the tube in the circuit when there is a fault in charges.

Charge's limiter construction :-

Consists of :
1- Strong insulator body (Ocolone).
2- A disc of copper or aluminum.
3- Ocolone part fixed on the inner surface of the disc.
4- A spring (With a suitable force for the required work)

Charge's limiter operations :-

- Ionizing operation and producing charges in the ionizing chamber charges the disc (2 Fig 5) with the needed charge.
- The limiters disc ( 2- Fig. 6) is charged with the same charge of the disc (2 Fig. 5).
  [ Disc (2 fig. 5) is connected with the disc (2 fig 6)].
- There will be a repulsion force between the disc (2 fig 6) and the disc (2 fig.5). ( Both discs have the same charge and there position is vertical )
- The repulsion force push the charge limiter disc backward and pressing the spring behind.
  Connecting the current cut out to the charge limiter disc and take its move from the disc.
- When the repulsion force between disc ( 2 Fig. 5) and the limiter disc (2 Fig. 6) more than the force of the spring then the disc move backward and switch off the current in the circuit and so the tube will stop working
- In the case of decreasing the electrostatic charge for any reason, the repulsion force decreases and the spring pull charge limiter disc to the original position to connect the current with the tube to provide the charges lost instead.

The second source for generating the electrostatic charge:

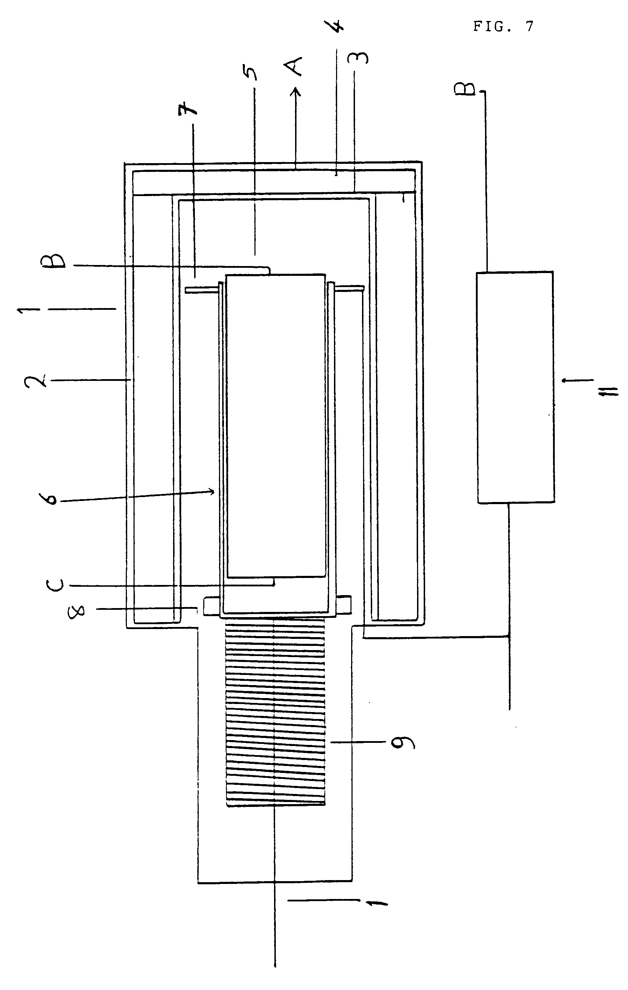

**The new electrostatic charge photoelectric generator:-(Fig. 7)**

**Operating Theory :-**

It depends upon the photo-electric phenomenon.

It means "Incidence of a mono colored light on an active metal surface, radiate electrons out of the metal surface".

Consists of :

1- Metallic body
2- Sodium, potassium or cesium layers.
3- Light filter.
4- Metallic disc (copper or aluminum).
5- Mercury vapor lamp
6- Movable metallic cover.
7- Metallic ring works as an anode.
8- Bases with grooves.
9- Spring.
10- Pulling wire
11- condenser

- Arrow (A) points to rest motor parts direction.
- Arrow (B,C) points to battery direction.

Operation :-

- Start the mercury vapor tube working as shown in (Fig-7) In the shown position The light pass through the light filter result in a mono light this light incident on the active metal surface (sodium - potassium - cisuime) with a negligible amount.
- Pull up the metallic cover (6) by pulling the wire (10)
  In this position the active metal surface will be gradually exposed to the single light, electronics will radiate out of the surface"

Electrons increase in number when the most area of there active metal surface is exposed to the mono light.

- Connected the anode with any terminal of the condenser, then connect the two terminals (Anode terminal and condenser terminal) together with the positive pole of the battery.
- The anode attract all electrons radiated out of the active metal surface and charge the condenser with its full capacity.
  "Condenser capacity is defined according to the required charge"
- Connect the condenser with the mercury vapor lamp circuit.
  "Condenser stops flowing current to the mercury vapor tube at its full capacity"

The function of the condenser :-

- Stop the mercury vapor tube working after producing the require electrostatic charge.

Notes :-

- The charges which radiated out of the active metal surface is not the electrostatic charges which will enter the motion chamber.
- The charges which enter the chamber created from :-
  1 - When the electrons radiated out from the metal surface the metal will have a positive charge.
  2- As a result of attaching the metal with the disc (4) the disc will have the same charge-(positive charge), this is the charge which enter to the motion chamber.
- The bases with grooves (8) is for fixing the metallic body and move horizontal.
- The metallic body (1) must be completely emptied of air to prevent the active metal surface oxidation.

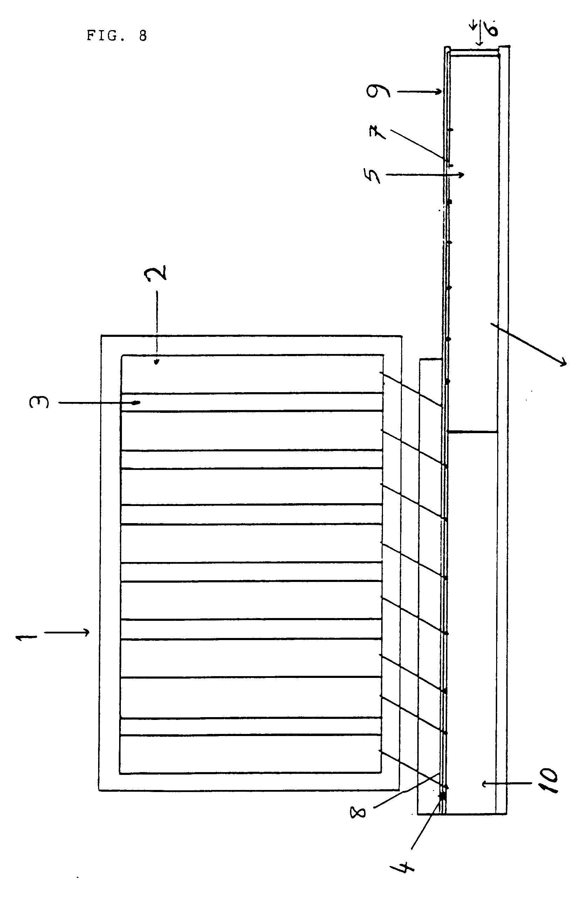

**Electrostatic charges generator by using ionization (Fig. 8) :**

Operating theory:

As known, Substance in the ionized matters has separately the positive and negative charges.

Construction :-

1- Metallic body, the inner surface is coated with an insulator.
2- Discs made of( copper, Iron, Aluminum Carbon ) in its ionized state (Iron is preferable, since it has 6 electrons).
3- Chambers for inert gas ( Helium) to keep the element in the ionized state.
4- balls made of the same element, each ball works as connection points.
5- An horizontal moveable metallic part, insulated of air. (It preferable to put it in an inert gas, helium)
6- Insulated part placed on the outer edge of the metallic part (5).
7- Holes in the metallic part (5) for the metallic balls (4).
8- Grooves made of insulated substance move on it the metallic part (5).
9- Metallic chamber include the metallic part (5), balls ,inert gas and the insulated grooves.
10- Holes fill of the inert gas.

Operating :-

- Connect each ball (4) with the ionized disc (2).
- Before starting, the ionized part (5) will not be connected with any ball.
- When moving the insulated part (6) it moves toward the ball, connecting the first ball.
- The first ball gain electric charge which transmitted to the motion chambers.
- In need of more charge, the metallic part will move to connect with the second, the third ball and so on.

**A part for generating electric potential difference.**

**consist of :**

1- Crystal potential generator.
Or
   Induced potential generator.
2- Mechanical potential poles reverser.

**1- Crystal potential generator :**

Operating Theory :-

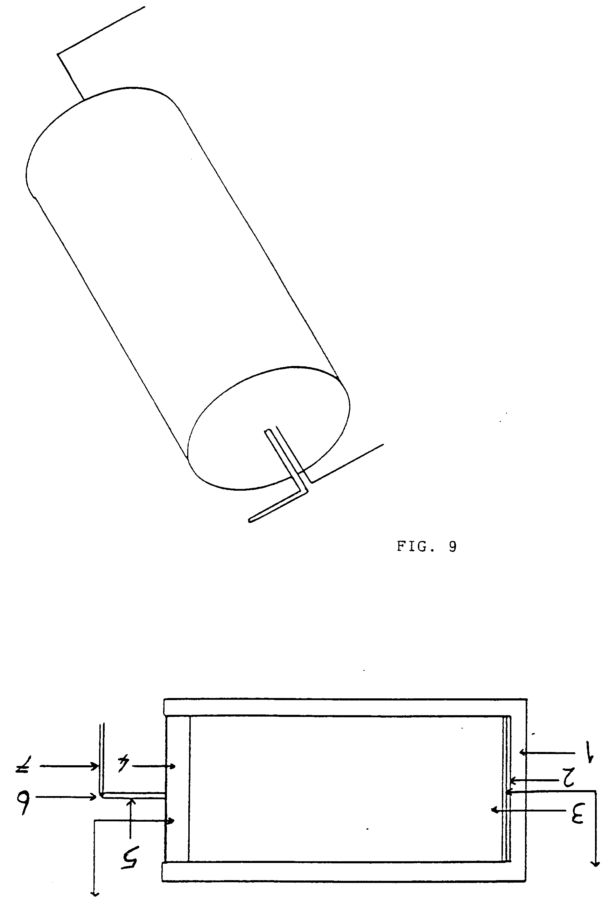

   It depends upon the piezoelectric phenomenon.
   Construction :- (As shown in Fig. 9)
1- A body made of strong insulated substance ( Ocolon).
2- A copper disc.
3- Cut of hexagonal crystal made of quantize.
4- A copper disc.
5- Insulated lever connection
6- Central Axis
7- Sliding lever

Operating :-

- Pull back the sliding lever (7) to press on the disc (4), the disc will press the crystal.
- The potential difference will be created on both side of crystal, fix the lever in this position.
- The arrow (a,b) represents potential on both crystal side.
- Be sure that there is not discharge between the two crystal sides so the potential difference still constant without needing to recharge and thus the disc will press the crystal only one time and the lever still pressing all the time of operation.

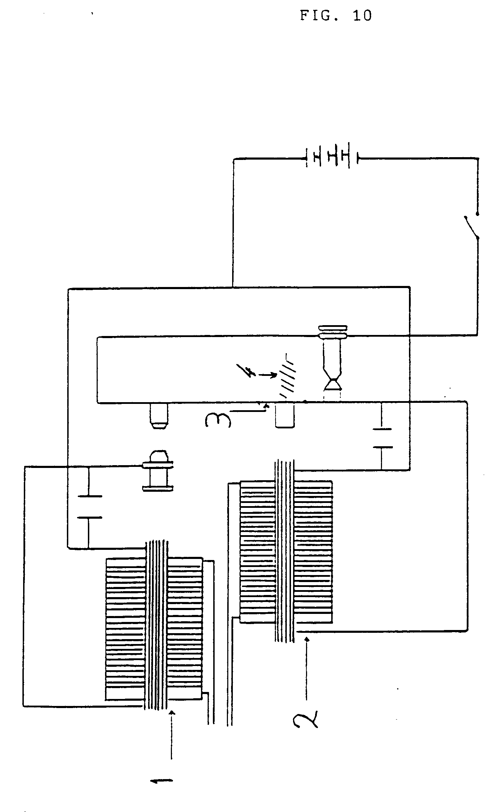

   The type of generators generate a constant potential in value and direction.
   The induced potential generator " Rumkorff coil " (Fig. 10)

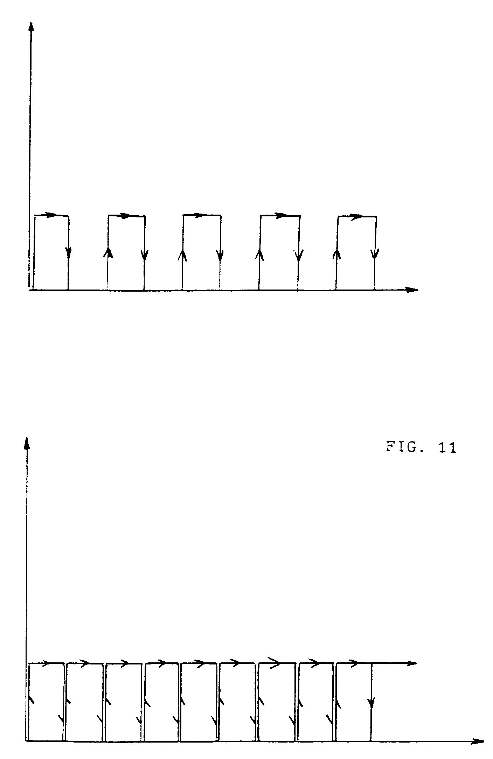

- As, known coil produces as alternating potential (value only) (Curve 1 Fig. 11 ).
- Rumkorff in its common construction is not suitable as a part of electrostatic motor thus we did some change on it to produce constant potential (Fig. 11 Curve 2).
- Connect the cut out of a sub-coil (primary coil + secondary coil) with the cut out of the rumkorff main coil ( Primary and secondary coil).
- The positive potential form the battery is constant on the two coils ( primary of the sub-coil and Rumkorff primary coil).
- Connect the negative potential from the battery with the cut out.
- When cutting off the current in either the sub-coil primary or Rumkorff primary coil (for something wrong) the current conduct in the other coil. thus we obtain a constant potential.

Connection circuit: (Fig. 10 Shows)

   1- The main (Primary + Secondary coils) (Rumkorff)
   2- The sub-coil (Primary + Secondary coils) (Sub-coil)
   3- An insulated part.
   4- Spring.
   (N) of both secondary coils (Sub-coil - Rumkorff) can be defined as follow :

$$E2/E1 = N2/N1$$

Where:
E1 = The voltage of the primary
E2 = The output voltage of The secondary
N1 = Number of turns of the primary
N2 = Number of turns of the secondary

**The electrostatic potential pole mechanical reverser.**

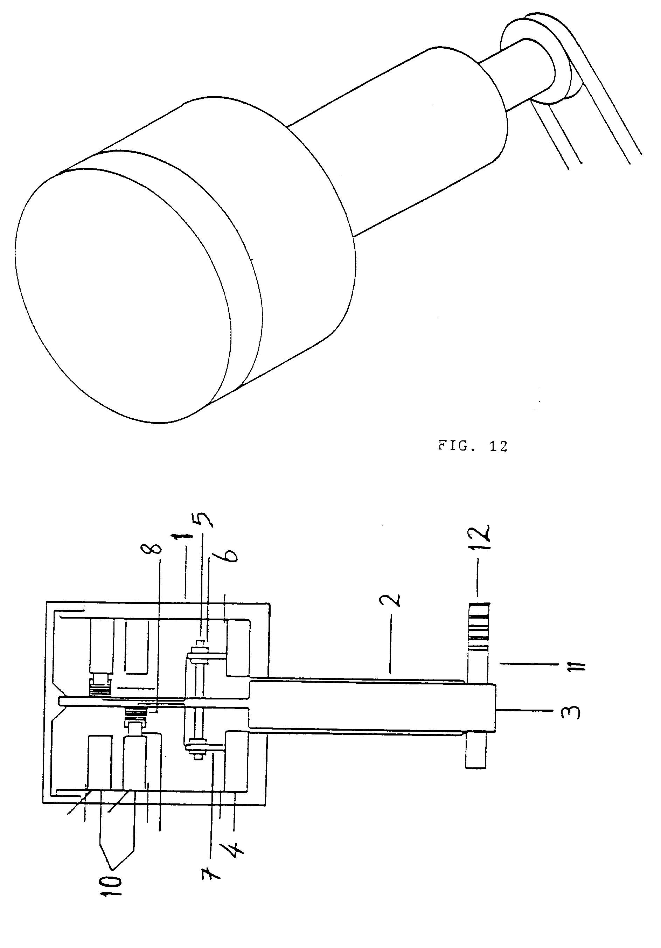

**Function: (Fig. 12)**

   Reversing the electrostatic potential which is generated by either:

- crystal generator or Induced generator

Construction:

1 - Cylindrical body made of ocolon with a front cover.
2- Metallic cylinder include bears inside.
3- Steel moveable shaft inside the cylinder.
4- Two halves made of copper with insulator in between.
5- Metallic part attached on the metallic shaft (3).

6- Ocolon part attached on the metallic part (5) ( The set ocolon + metallic part (5) move on the disc).

7- Two copper parts attached on the metallic part (5) with pieces of occolon (6).

8- Two ocolone boxes are supported on the shaft (3) and include two springs inside.

9- A copper part is supported on the springs inside the boxes (8).

10- Insulated discs with central hole, the metallic part(9) moves inside the hole.

11- A gear.

12- belt to transferee the motion to the shaft (3).

Operating :(Fig. 12)

At Starting of motion
- Suggest the disc (a) ( One of the two disc (10)) has a negative potential.
- The another disc (b) (the second disc (10)) has a positive potential.
- Then the half disc (4) in the right side will be charged with negative potential.
- The another half disc (4) will be charged with positive potential result from connection between the copper parts (9) and (7).

Starting :-

The belt and the gear transmit the motion to the shaft (3).

Then the two copper part (7) will change its position on the disc (4). (the negative half becomes positive, the positive becomes negative).

The shaft and the copper part are designed for only one cycle of the shaft result in interchangeable of the potential at the maximum speed of the electrostatic motor.

**A part for converting the electrostatic potential difference and electrostatic charge to kinetic energy :**

Consist of :

1- Double piston motion chamber

This chamber consists of:

1- Small oil tank

2-3 Two pass ways for oil (Inlet & outlet).

4- Oil for lubrication.

5- Small piston.

6- Cast iron cylinder.

7- Insulator.

8- A disc made of copper or aluminum (for potential).

9- Nut

10- A disc made of copper or aluminum (for charge)

11- Steel shaft.

12- Metallic chamber.

13- Insulated parts for supporting the potential discs(8)

14- Insulated bases.

15- Cast iron cylinder.

16- Piston.

17- Pin

18- Connection between the crank shaft and the steel shaft (11).

Operating:

- Charge the disc (10) with the required charge.
- The output of the potential pole reverser (fig. 12) loaded on the two discs (8-8 ) then they produce an electric field intensity (E)

$$E = V/D$$

Where

V = Potential difference on the two discs (Volt)

D = Distance between the two discs (Meter)

The electric field effect the charged disc(10) by movable force (F)

$$F = Q^*E$$

Q = the charge (coulombs)

- F gives the disc (10) and the shaft (11) Kinetic energy .

$$K = Q^*V$$

Where

K = Kinetic Energy

Starting:

- Suppose that the disc (10) is at the end of the distance between the two discs at the right hand and the disc (8) at the right side and is charged with negative potential the another disc is loaded by positive potential.

The disc (10) charged with negative charge then it will move from right to left.

Notes:

Be sure that the two discs of charge, the potential disc and the shaft (11) are completely insulated.
- The inner surface of the metallic chamber (12) is coated with an insulated substance.
- The two piston (5), (16) for let the shaft (11) in the horizontal position.
- the two directions (a,a) for entering the potential & (b) for entering the charge.

- It is preferable to empty the chamber (12) from air to avoid big charge lost due to the friction between air and the disc (10).

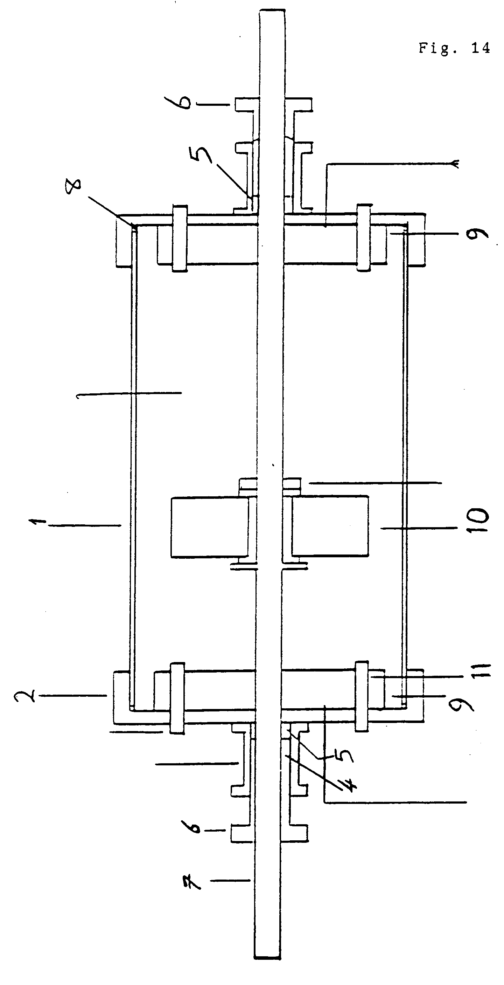

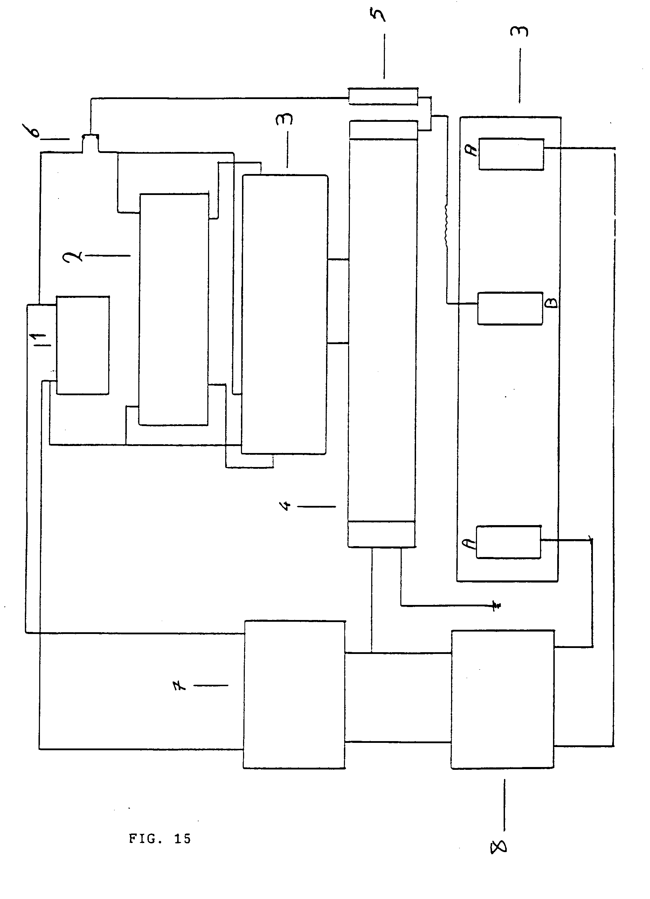

**The motion chamber with the stuffing box (Fig. 14)**

Construction :

1- Metallic chamber coated with an insulated substance.
2- Metallic covers.
3- Stuffing box
4- Soft or hard filling (In case of high energy generators we used hard filling).
5- Copper Liners (Bears)
6- Gland
7- Motion shaft
8- Insulated layers
9- Copper discs (potential discs)
10- Copper discs (charge discs)
11- Insulated Fixing parts.

Operating:

The operating of this chamber is the same as the previous chamber but it differ in the design.
- Fill the chamber with a low pressure inert gas to keep the charge on the charge disc.

It is preferable to suck the air from the chamber to avoid any obstacle to the potential where the density of the medium obstacle the working of the electric field.

This chamber is used when we use photo electric charge generator or the electrostatic charge generator with the ionized state of substance because there is no losses in the charge and if it is happened it will be negligible.

This chamber is connected to crank shaft to convert the frequent motion to circular motion.

Connection panel when use the charge generator by the ionizing rays.
(Fig. 15)
1- Battery
2- Roentgen tube Potential generator.
3- Roentgen tube to generate X rays.
4- Ionizing chamber.
5- Charge limiter
6- Cut out
7- Motion chamber generator
8- Potential pole generator
9- Motion chamber
(a,a) Potential discs & (b) Charge disc.

Connection

- Two terminal from the battery directed as follow:

1- The first terminal (+,-) to the charge generator.
2- The other terminal (+,-) to the potential generator.

The first terminal path will be as follow:
Cut out to Potential generator to Roentgen tube filament
The second terminal directly to the induced generator (Rumkorff coil).
- The disc (5) is connected to the disc (b) and the disc of the motion chamber [(10) Fig. 13]
.
- the potential generator is connected to the potential pole reverser and the reverser is connected to the discs(a,a).
- The ionizing chamber potential disc is connected to the negative pole of the potential generator and is connected to earth.

Controlling the reasons of the energy { The potential difference - the electrostatic charge }

- The potential difference with out ampere.
- It is a problem to control the electrostatic charge by using the traditional devices such as cut out, Distribute.

So we must save the charge without any losses unless we shall recharge it again.

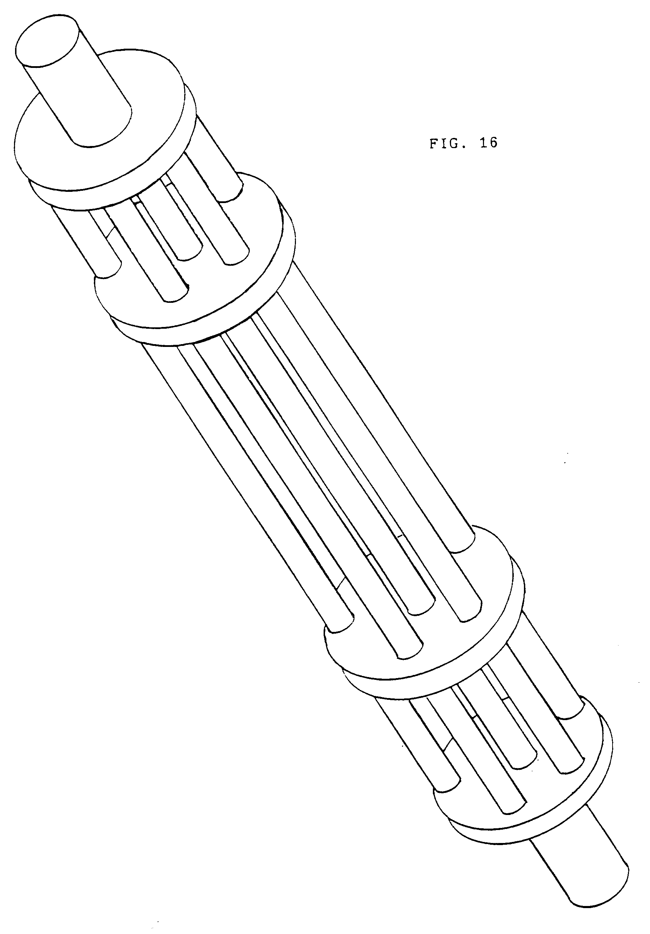

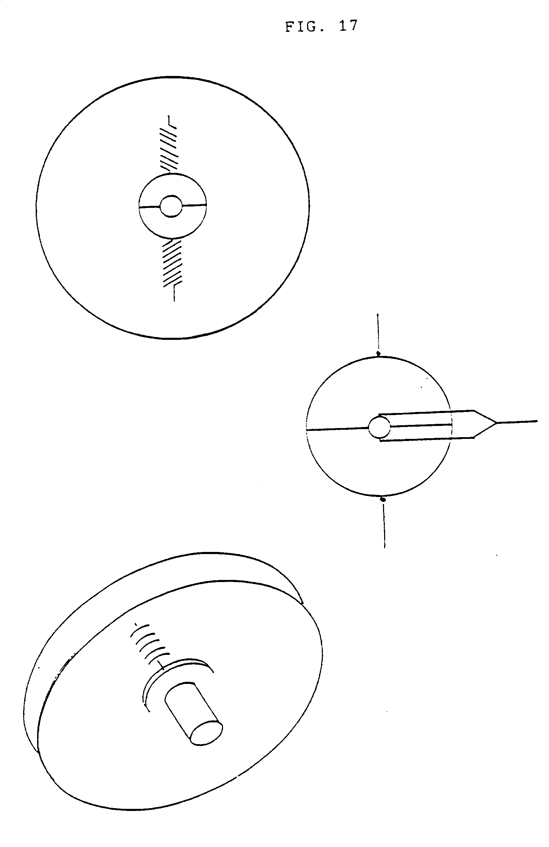

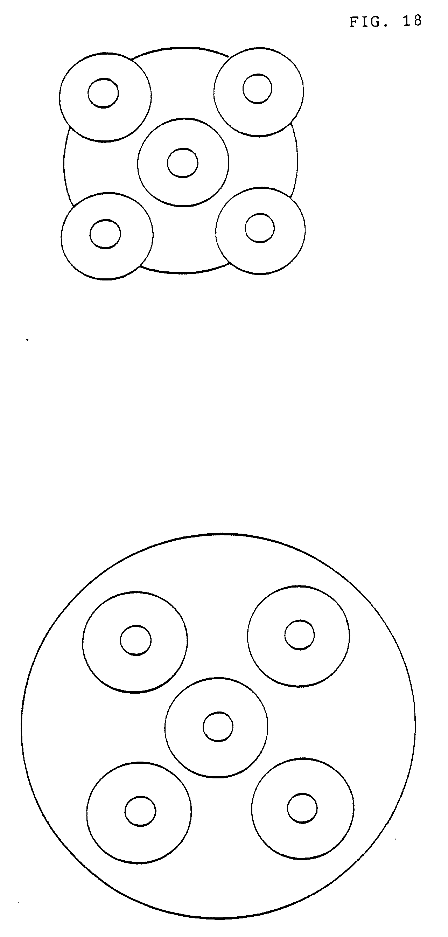

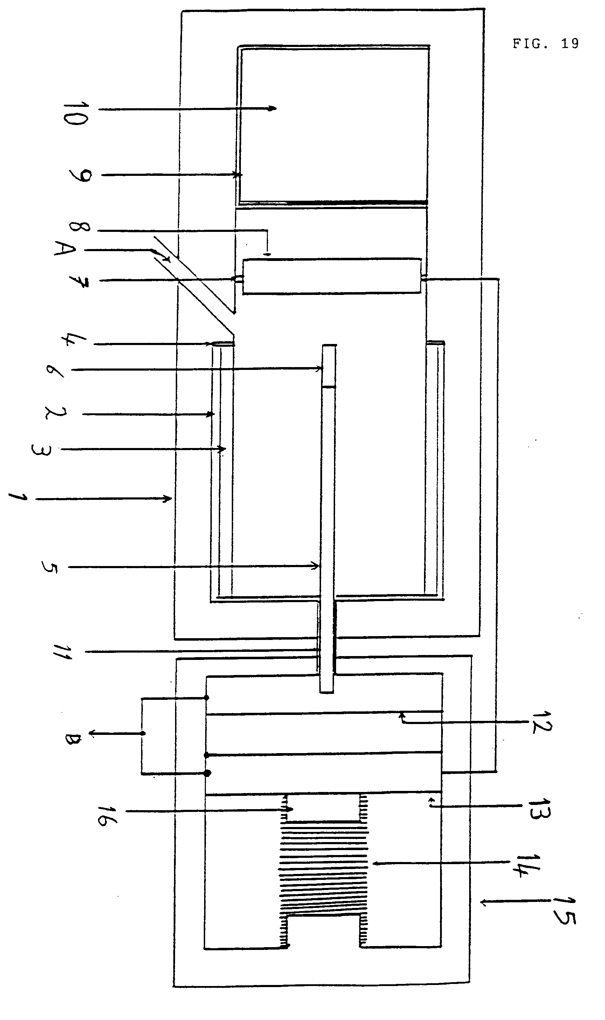

So we designed the potential discs and charge discs to reduce the input of both of them.
That can be done by:
- Designing the motion shaft as shown in Fig. 16.
- The discs (Fig. 18) charged attached to the shafts in Fig. 16. and all of them can operate in the same time or part of them.
- Insulated discs (fig. 17) divided into two halves attached to the potential discs and its radius equal to the radius of charge discs.
- There are two springs to control the gab between the two halves of the discs (fig. 17) and there are two obstacle at the end side of each half of the disc and we control them by pulling or pushing them by spring supported under each obstacle and pulling wire supported in each half as in Fig. 17.

Operating:

- At starting All the charge discs charged so the motor gives the maximum power we can obtain from it but when we want to reduce the power we do the following:

At the beginning we terminate the affection of potential difference between the two potential discs and the charge discs which we want to reduce power of it by pulling the two halves of the insulated discs which they make obstacle prevent the affection of the potential on the charge disc.

Be sure that the force effect on the central shaft (Fig. 16) is resultant of the forces result from the sub-shafts Fig. 16

Another method to produce the electrostatic charge.

The electrostatic charge generator with the ionized rays from the atomic wastes:

As known at the uranium -235splitting it transfer to a number of medium mass substance like Yode (I) - Barium(Br) - Stranchium - Zircon - cesium(Ce).

This substance which we call the atomic wastes, It produce to kind of rays Bite & Gamma . The electrostatic charge generator with the ionized rays from the atomic wastes ionize the air by using rays Produced from Cesium -137 or stranchium -90, Its construction as in Fig. (19):

1- Copper cover thickness not less than 2 Cm.

2- Isolated room ( Ex.Using Glass).

3- Metallic cylinder ( Multi sides).

4- Hard Insulator

5- Cylindrical copper Bar its radius in range of 1 to 1.5 Cm.

6- Copper connection (Its radius equal the radius of the bar(5) and its length not less than 2 Cm.).

7- Movement axis.

8- Copper disc its thickness not less than 2 Cm.

9 - Insulator Container ( Ex. Glass).

10- One of the atomic wastes ( Ex. Cesium -137 Or stranchume - 90 )

11- Hard Insulator.

12- Copper disc connected to Bar (5).

13- Copper disc similar to disc(12).

14- Spring

15- Insulator cover.

16- Insulator

Operating Method:

This generator consists of three parts:

1- Part for Producing and controlling the ionized rays

2- Part for Ionizing the air and obtain the negative charge (Ionization chamber).

3- Part for Controlling the charge and the generator.

The air enter to the ionization chamber from the hole (A) at this moment the copper disc (8) is in the horizontal level then the Beta and Gamma rays are radiated from the radiation source ( Cesium -137 Or Stranchume-90) and enter to the ionization chamber. This rays ionize the air inside the chamber producing positive ions and electrons.

The chamber (3) has a negative potential (From the potential generator) so it will attract the positive charge and repulse the electrons to the copper bar(5) so it will charged by negative charge and also the copper discs(12,13) ( Because of its connection to the Copper Bar) also A Part of the charge is transferred to movement chamber by a conductor as mentioned by arrow (B).

We chose the spring(14) with a suitable force however the discs(12,13) charged by the required charge the repulsion force between the two discs(12,13) is more than the spring pressure force so the disc(13) moves back pulling the copper disc (8) making it in a vertical position so it prevent arriving of the rays to ionization chamber.

**Claims**

1. Using the effect of the potential difference on the electrostatic charge, whether positive or negative this is divided into three parts : the first producing electrostatic charge - the second, generating potential difference (electric field )- the third, converting the potential difference and the electrostatic charge into kinetic energy.

2. As mentioned in claim 1 , an electrostatic motor consisting of a battery ( cathode tube,ionizing chamber, charge limiter) or ( photo electric generator ) or ( the electric generator for ionization of matter ) - motion chamber-induced potential generator or crystal potential generator - pole reverser potential generator .(Fig. 1)

3. As in claims 1 and 2, using the new tube for producing static electricity from air ionization (figs 2,3,4 ) and the new ionization chamber ( fig 5 ) and the new charge limiter (fig 6 ).

4. As in claims 1 and 2, adding sodium, or potassium or cesium, using the photo electric theory to get a positive static charge ( fig 7 ).

5. As in claim 4 and ( fig 7 ) the new photo cell for generating the constant positive electrostatic charge.

6. As in claim 1 and 2, using the electrostatic charge from the ionized state of matter as in the electric charge generator for the ionized state (Fig. 8).

7. As in claims 1 and 2, the induced potential generator for producing a large constant(value) potential difference form a small potential difference as in ( Fig. 10 ) .

8. As in claim 7, using two starters and two cut out (fig 10). Also it is possible to use the crystal potential generator as a substitute device for the previous work (fig 9 ).

9. As in claims 1 and 2 , the potential difference pole reverser, for reversing the potential produced form either of the potential generators. It consists of an insulated cylindrical body with a cover . It contains a bearing, a steel shaft, copper parts, a gear and a belt for transmitting the motion (fig 12).

10. As in claims 1 and 2 , the motion chamber of the charge generator for ionized radiation (fig. 13 ).

11. As in claims 1 and 2, motion chamber in the photo electric charge generator and the charge generator for ionized matter ( fig. 14 ).

12. As in claims 1 ,10 and 11, the method for controlling the input which cause energy and velocity ( potential difference and electrostatic charge) fig ( 16,17,18 ) .

13. We can generate the electrostatic charge from the electrostatic charge generator with the ionization rays from the atomic wastes (Fig. 19).

FIG. 1

EP 0 602 767 A1

FIG. 2

FIG. 3

FIG. 4

FIG. 5

FIG. 6

FIG. 7

FIG. 8

FIG. 9

FIG. 10

FIG. 11

FIG. 12

EP 0 602 767 A1

FIG. 13

Fig. 14

FIG. 15

FIG. 16

FIG. 17

FIG. 18

FIG. 19

EP 0 602 767 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | PROCEEDINGS IEEE MICRO ELECTRO MECHANICAL SYSTEMS, 1991, NEW YORK pages 9 - 14, XP000295535 EGAWA ET AL. 'Film actuators: planar, electrostatic surface-drive actuators' | 1 | H02N1/00 |
| A | * page 9, right column, line 30 - page 10, left column, line 19 * <br> * page 10, right column, line 1 - page 11, left column, line 11; figure 3 * | 2,3,12 | |
| A | US-A-5 084 645 (COLLINS, JR. ET AL.) <br><br> * abstract * | 1,2,10, 11 | |
| A | FR-A-757 710 (PANIAGUA) <br> * page 2, line 9 - line 21; figures * | 2,7 | |
| | | | TECHNICAL FIELDS SEARCHED (Int.Cl.5) <br><br> H02N |

The present search report has been drawn up for all claims

| Place of search | Date of completion of the search | Examiner |
|---|---|---|
| THE HAGUE | 30 March 1994 | Zanichelli, F |

EPO FORM 1503 03.82 (P04C01)